# EUROPÄISCHE PATENTANMELDUNG

(11) **EP 0 826 579 A1**
(43) Veröffentlichungstag der Anmeldung: **04.03.1998**
(21) Anmeldenummer: 97110177.9
(22) Anmeldetag: 21.06.1997
(51) Int. Cl.: B62D 35/00

(54) **Personenwagen mit flügelartiger Luftleitvorrichtung**

(30) Priorität: 30.08.1996 DE 19636331
(71) Anmelder: Dr.Ing.h.c. F. Porsche Aktiengesellschaft, 70435 Stuttgart (DE)
(72) Erfinder: Larson, Grant, 71638 Ludwigsburg (DE); Geffert, Otto, 74354 Besigheim (DE)

(57) **Zusammenfassung**

Dieser Personenwagen (1) umfaßt eine eine Außenhaut (5) bildende Heckverkleidung. Besagte Außenhaut weist - von der Seite gesehen - einen entgegen der Fahrtrichtung bogenförmig abfallenden Konturverlauf auf.

Oberhalb dieses Konturverlaufs ist eine Luftleitvorrichtung (12) mit einem Leitwerk (13) vorgesehen, die zur Optimierung der aerodynamischen Eigenschaften des Personenwagens dient.

## Beschreibung

Die Erfindung betrifft einen Personenwagen nach dem Oberbegriff des Patentanspruchs 1.

Ein bekannter Personenwagen, DE-M 95 05 871.0, weist eine Heckverkleidung mit einem entgegen der Fahrtrichtung nach hinten bogenförmig abfallenden Konturverlauf auf.

Aufgabe der Erfindung ist es, an der Heckverkleidung solche Vorkehrungen vorzusehen, daß unter Beibehaltung ihrer ästhetischen Grundkonzeption die aerodynamischen Eigenschaften des Personenwagens, insonderheit der Abtrieb optimiert werden.

Erfindungsgemäß wird diese Aufgabe durch die Merkmale des Anspruchs 1 gelöst. Weitere, die Erfindung ausgestaltenden Merkmale sind in den Unteransprüchen enthalten.

Die mit der Erfindung hauptsächlich erzielten Vorteile sind darin zu sehen, daß durch die Luftleitvorrichtung die Aerodynamik des Personenwagens verbessert wird, und zwar auch in Richtung Reduktion des Auftriebs im Bereich der Hinterachse, was seine Fahreigenschaften günstig beeinflußt. Die gut wirksame Luftleitvorrichtung, die aus Kunststoff bestehen kann, läßt sich auf einfache Weise in die gegebene Formenstruktur der Heckverkleidung integrieren, dergestalt, daß ein ansprechender ästhetischer Effekt erzielt wird.

In der Zeichnung ist ein Ausführungsbeispiel der Erfindung dargestellt, das nachstehend näher beschrieben wird.

Es zeigt:
- Fig. 1: eine Ansicht von hinten auf das Heck des Personenwagens,
- Fig. 2: eine Teilansicht des Hecks,
- Fig. 3: einen Schnitt nach der Linie III-III der Fig. 1 in größerem Maßstab,
- Fig. 4: eine Schrägansicht von oben auf die erfindungsgemäße Luftleitvorrichtung.

Der Personenwagen 1 ist zweisitzig und mit einem beweglichen Verdeck 2 versehen, also sportlicher Gattung, das einen Fahrgastraum überspannt und am Aufbau 3 befestigt ist. Der Aufbau 3 umfaßt eine Heckverkleidung 4, die die Außenhaut 5 bildet.

Die Heckverkleidung 4 weist eine Haube 6 und Heckleuchten 7 auf, die auf der Oberseite 8 von einer höckerartigen Formlinie 9 eingrenzt werden.

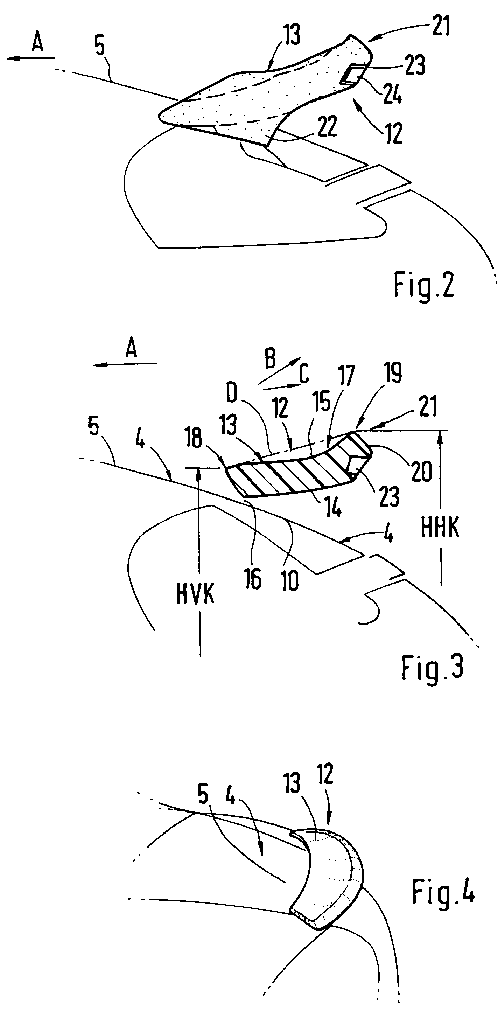

Gemäß Fig. 4 weist die Außenhaut 5 - entgegen der Fahrtrichtung A gesehen - einen bogenförmig abfallenden Konturverlauf 10 auf. Oberhalb des Konturverlaufs 10 ist eine Luftleitvorrichtung 12 angebracht, die ein flügelartiges Leitwerk 13 besitzt. Das Leitwerk 13 ist so gestaltet, daß eine untere Leitwand 14 und eine obere Leitwand 15, die beabstandet sind - entgegen der Fahrtrichtung A gesehen - einen von unten nach oben ansteigenden Formverlauf aufweisen - Richtung B und C -. Dabei ist das Leitwerk 13 unter Bildung eines Durchströmkanals 16 an die Heckverkleidung 4 bzw. die Außenhaut 5 herangeführt. Der Durchströmkanal 16 ist zumindest abschnittsweise über die Breite des Personenwagens konstant ausgeführt.

Die untere Leitwand 14 ist plan oder leicht bombiert gestaltet, wogegen die obere Leitwand 15 mit einem konvexen Formverlauf 17 versehen ist - von der Linie D aus betrachtet-. Dabei liegt eine Vorderkante 18 der Leitwand 15 - in Höhe des Fahrzeugs gesehen - tiefer als eine Hinterkante 19 dieser Leitwand 15 (HVK < HHK). Die Hinterkante 19 bildet mit einem angrenzenden Abschnitt 20 des Leitwerks 14 eine aerodynamische Abreißkante 21.

Das Leitwerk 14 ist unter Vermittlung - in Fahrzeugquerrichtung E-E gesehen - von im Abstand zueinander angeordneten Stützen 22 auf der Haube 6 der Heckverkleidung 4 angebracht. Die Stützen 22 sind so gestaltet, daß der durch den Durchströmkanal 16 geführte Luftstrom strömungsgünstig vorbeigeleitet wird. Außerdem können die Stützen 22 aus einem Stück mit dem Leitwerk 13 bzw. der Luftleitvorrichtung 12 hergestellt sein. Auch besteht die Möglichkeit, die Haube 6 und die Luftleitvorrichtung 12 aus Kunststoff zu fertigen.

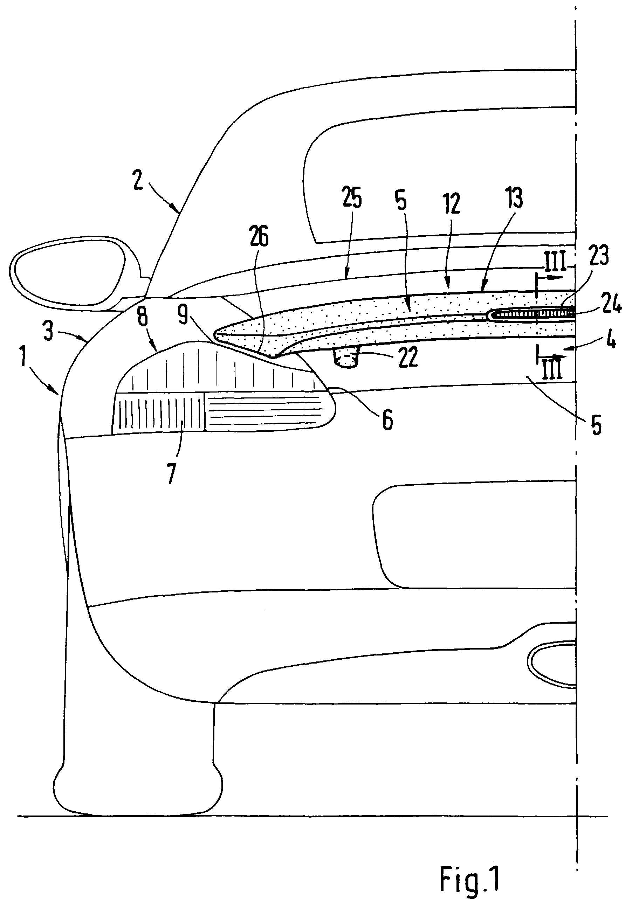

In Fig. 1 ist dargestellt, daß das Leitwerk 14 auf der dem Personenwagen 1 abgekehrten Seite eine Schlitzöffnung 23 aufweist, die zur Aufnahme einer Leuchte, vorzugsweise Bremsleuchte 24, dient. Darüber hinaus ist der Konturverlauf des Leitwerks - in Fahrzeugquerrichtung E-E gesehen - bogenförmig ausgebildet, d.h. dieser Konturverlauf folgt tendentiell der Grundform der Außenhaut 5 in Querrichtung des Personenwagens, wie sie in etwa durch die Formlinie 25 verkörpert wird. Dabei schließt das Leitwerk 14 organisch an seitliche Bereiche der Außenhaut 5 an, was durch die Angliederung der seitlichen Begrenzung 26 des Leitwerks 14 an die höckerartigen Formlinien 9 verdeutlicht wird.

Schließlich ist aus Fig. 4 ersichtlich, daß das Leitwerk 14 - von oben gesehen - eine sichelförmige Grundform besitzt. Dank dieser Gestaltung läßt sich die Luftleitvorrichtung 12 in die gegebene Form der Außenhaut 5 funktional und mit ästhetischem Effekt eingliedern.

## Patentansprüche

1. Personenwagen, vorzugsweise sportlicher Gattung, mit einer eine Außenhaut eines Aufbaus bildenden Heckverkleidung, welche Außenhaut - von der Seite gesehen - einen entgegen der Fahrtrichtung bogenförmig abfallenden Konturverlauf aufweist, dadurch gekennzeichnet, daß oberhalb des Konturverlaufs (10) eine Luftleitvorrichtung (12) angebracht ist, die ein flügelartiges Leitwerk (13) mit einer unterer Leitwand (14) und oberer Leitwand (15) umfaßt, die mit Abstand zueinander angeordnet sind, wobei die Leitwände (14, 15) einen entgegen der Fahrtrichtung (A) von unten nach oben ansteigenden Verlauf (Richtung B und C) aufweisen.

2. Personenwagen nach Anspruch 1, dadurch gekennzeichnet, daß das Leitwerk (13) unter Bildung eines Durchströmkanals (16) an die Heckverkleidung (4) herangeführt ist.

3. Personenwagen nach Anspruch 1, dadurch gekennzeichnet, daß die untere Leitwand (14) plan oder leicht bombiert ist.

4. Personenwagen nach Anspruch 1, dadurch gekennzeichnet, daß die obere Leitwand (15) konkav ist, wobei - in Höhe des Fahrzeuges gesehen - die Vorderkante (18) tiefer liegt als die Hinterkante (19).

5. Personenwagen nach Anspruch 4, dadurch gekennzeichnet, daß die Hinterkante (19) mit einem angrenzenden Abschnitt (20) nach Art einer aerodynamischen Abreißkante (21) ausgebildet ist.

6. Personenwagen nach Anspruch 1, dadurch gekennzeichnet, daß das Leitwerk (13) der Luftleitvorrichtung (14) mit beabstandeten Stützen (22) auf die Heckverkleidung (4) aufgesetzt ist.

7. Personenwagen nach Anspruch 6, dadurch gekennzeichnet, daß die Stützen (22) aus einem Stück mit der Luftleitvorrichtung (12) hergestellt sind.

8. Personenwagen nach Anspruch 6, dadurch gekennzeichnet, daß die Luftleitvorrichtung (12) an einer in die Heckverkleidung (4) integrierte Haube (6) befestigt ist.

9. Personenwagen nach Anspruch 8, dadurch gekennzeichnet, daß die Heckverkleidung (4) und die Haube (6) aus Kunststoff, Leichtmetall oder dgl. bestehen.

10. Personenwagen nach Anspruch 1, dadurch gekennzeichnet, daß das Leitwerk (14) - von oben gesehen - eine etwa sichelförmige Grundform aufweist.

11. Personenwagen nach einem oder mehreren der vorangehenden Ansprüche, dadurch gekennzeichnet, daß das Leitwerk auf der dem Personenwagen abgekehrten Seite mit einer Leuchte, z.B. Bremsleuchte (24) versehen ist.
